# EUROPEAN PATENT APPLICATION

(11) **EP 0 895 713 A1**
(43) Date of publication of application: **10.02.1999**
(21) Application number: 98306339.7
(22) Date of filing: 07.08.1998
(51) Int. Cl.: A01G 9/12

(54) **Improvements to arch structures**

(30) Priority: 08.08.1997 GB 9716794; 27.03.1998 GB 9806557; 14.04.1998 GB 9807653
(71) Applicant: Bruno, Eva Dilys, Barry, Vale of Glamorgan, CF62 6RQ (GB)
(72) Inventor: Bruno, Eva Dilys, Barry, Vale of Glamorgan, CF62 6RQ (GB)
(74) Representative: Evans, Huw David Duncan

(57) **Abstract**

An arch structure, particularly for use as a garden trellis arch but also usable as a porch for an entrance to a building, comprises two opposite side panels (19) pivotally connected to single top panel, or to respective top panels (15) which are themselves pivotally connected together. The arrangement enables the two side panels to be closed together for storage or transport of the arch, but then opened apart for use.

## Description

The present invention relates to arch structures and more particularly to trellis arches and porches.

Most trellis arches and porches are constructed of sections which are nailed, screwed, bolted or otherwise secured together using brackets etc. Such arches are generally difficult for the purchaser to assemble and erect and, inmost cases, are costly to manufacture and transport.

It is an object of the present invention to provide an arch structure which is of pre-assembled construction and easy to erect and of adjustable width and height.

In accordance with the present invention, there is provided an arch structure which comprises two opposite side panels pivotally connected to a single top panel, or to respective top panels which are also pivotally connected together, the arrangement enabling the two side panels to be closed together for storage or transport and opened apart for use.

Preferably each of the panels comprises an open framework formed of wooden battens: however, this framework may be formed of other materials e.g. metal or plastics.

Preferably each side panel includes two uprights which project upwardly from the top of the side panel and the top panel, or respective top panel, extends between these two uprights and is pivoted to them. Where the arch structure has two top panels pivoted to each other, then the structure will fold down with the two side panels flat against each other and also the two top panels flat against each other.

Each adjacent pair of panels may be pivotally interconnected by means of bolts or by means of hinges. The hinges may be of any appropriate type, including one-piece hinges of plastics material or flexible straps nailed or otherwise secured at their opposite ends to the respective panels.

It will be appreciated that the arch structure of the present invention can be stored or transported folded down and therefore occupying little space. However, the structure can then be erected easily by moving the side panels apart through the required distance. Where the structure has two top panels pivotally connected together, the distance through which they are moved apart can be selected, correspondingly selecting the height of the apex.

The arch structure may be used to form a porch at the doorway or other entrance to a house or other building. In this case, the porch will further comprise sheets to cover the top and side panels: these sheets may comprise clear or coloured plastics material or may comprise any other appropriate material. Furthermore, a ridge member is preferably provided to cover the apex. Preferably sealant is used to seal between the covering sheets and their underlying panels, at least along side edges of the panels.

Embodiments of the present invention will now be described by way of examples only and with reference to the accompanying drawings, in which:
FIGURE 1 is an end view of a first embodiment of trellis arch in accordance with the present invention, the arch being shown folded down;
FIGURES 2 to 4 are diagrams to show the arch set to different widths when erected;
FIGURE 5 is an isometric view of the arch of Figure 1 when erected;
FIGURE 6 is a side view of a post for use in erecting the trellis arch of Figure 1;
FIGURE 7 is a view of a hinge used in the trellis arch of Figure 1;
FIGURE 8 is an isometric view of a second embodiment of trellis arch in accordance with the present invention, shown when erected;
FIGURE 9 is a view showing the pivotal attachment of one of the top panels of the trellis arch of Figure 8 to its side panel;
FIGURE 10 is an end view of a modification to the trellis arch of Figure 8;
FIGURE 11 is an end view of another modification to the trellis arch of Figure 8;
FIGURE 12 is a corresponding view of the trellis arch of Figure 11, when folded down;
FIGURE 13 is a front view of a porch in accordance with the present invention;
FIGURE 14 is a view of a covered top panel of the porch of Figure 13;
FIGURE 15 is a view of an alternative hinge which may be used in the arches of the present invention;
FIGURE 16 is a view of another alternative hinge; and
FIGURE 17 is a view of a bracket for use in the trellis arches of Figures 8 and 11 or the porch of Figures 13 and 14.

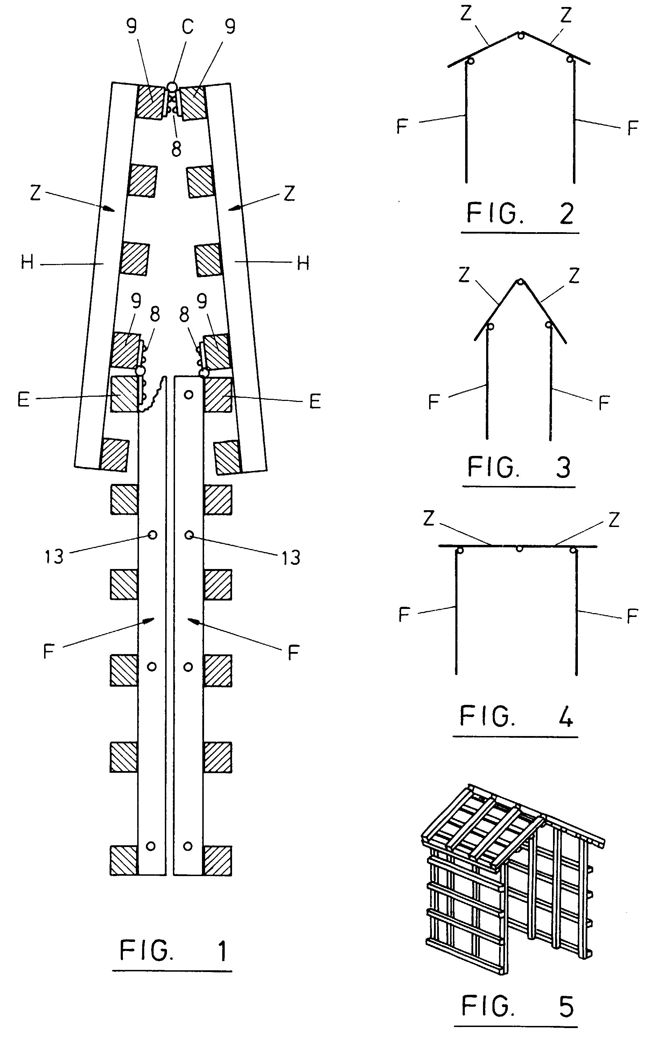

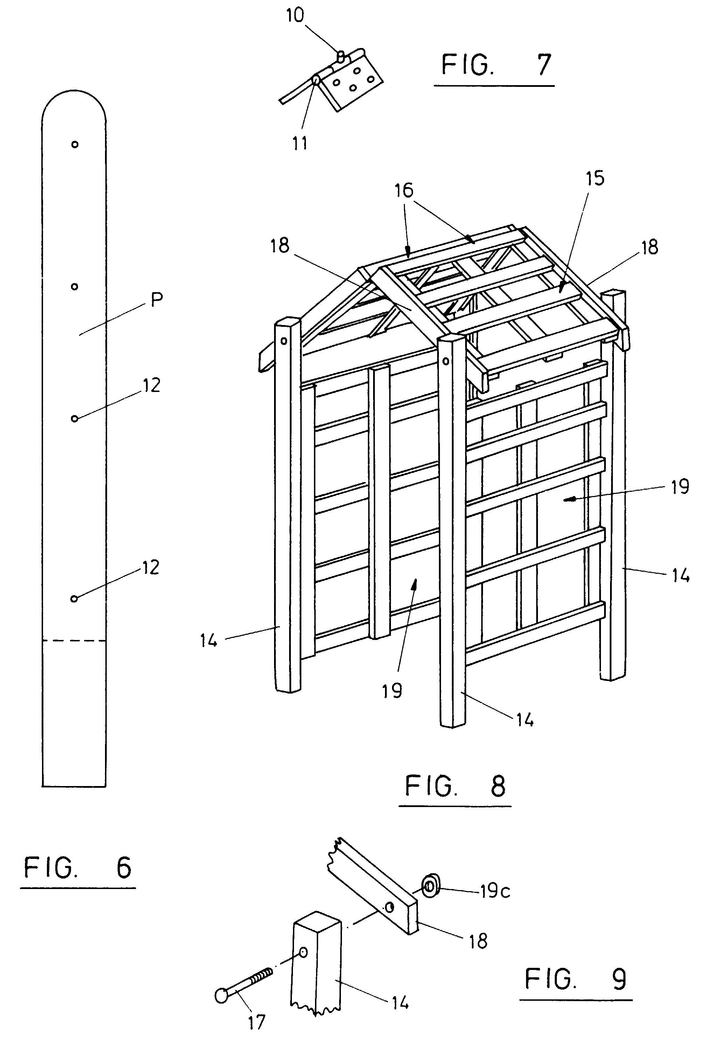

Referring to Figures 1 to 5 of the drawings, there is shown a pre-assembled trellis arch, folded down flat in Figure 1 and opened out and erected in Figure 5. The trellis arch comprises two side panels F, F hinged to two top panels, Z, Z, which themselves are hinged together. Each side panel F comprises a series of vertical battens and a series of horizontal battens E fixed on the outer faces of the vertical battens. Each top panel Z comprises a series of battens H which extend towards the apex of the arch, and a series of horizontal battens 9 fixed on the inner faces of the battens H. Hinges 8 connect the top horizontal batten E of each side panel F to the last-but-one horizontal batten 9 of a respective top panel Z, and also connect together the top horizontal battens of the two top panels, at the apex C of the arch. In the example shown, each pair of panels are interconnected by three hinges 8, but in general any appropriate number may be used. Some or all of the hinges may incorporate a locking means, for example a grub screw 10 may be threaded into the body of the hinge for tightening against the hinge pin 11 (Figure 7), effectively locking it, once the arch has been opened out.

From Figure 1, it will be seen that when the arch is folded down, the two side panels F, F lie flat against each other. As shown in Figure 5, the arch can be opened out for use: Figures 2, 3 and 4 show that the arch can be opened out to any desired width or height.

Although the arch is robust, posts P can be provided at all four corners of the arch. The post P may be pre-drilled with holes 12 to align with holes 13 in the outer upright battens of the side panels F, F, for receiving fixing bolts or the like. Instead, these battens of the side panels may be simply nailed to the posts P. The posts P may be located in holes in the ground and concreted in. Instead, fixing brackets may be secured to the bottom or side of each post to enable fixing to flat concrete floors.

In the trellis arch shown in Figure 8, each side panel comprises a trellis 19 formed of horizontal and vertical battens and nailed to opposite upright post 14 the tops of which project above the top edge of the trellis 19. Each top panel comprises a trellis 15 nailed to opposite skirting boards 18: the two top panels are joined together by two hinges (indicated at 16) and extend, at their lower edges, between the upright posts 14 of the respective side panels. Each top panel has its opposite skirting boards 18 pivoted to the uprights 14 of the side panel by means of a bolt 17 (Figure 9) passed through aligned holes in these two members and fastened by a nut 19c. Although the bottom edge of each top panel projects outwardly beyond its side panel, the arch can be folded down with its side panels flat against each other and also with its top panels flat against each other, the bottom edge portion of each top panel fitting into the gap provided at the top of its side panel, between the upwardly projecting tops of the posts 14. Once the arch is opened out, the bolts 17 are tightened.

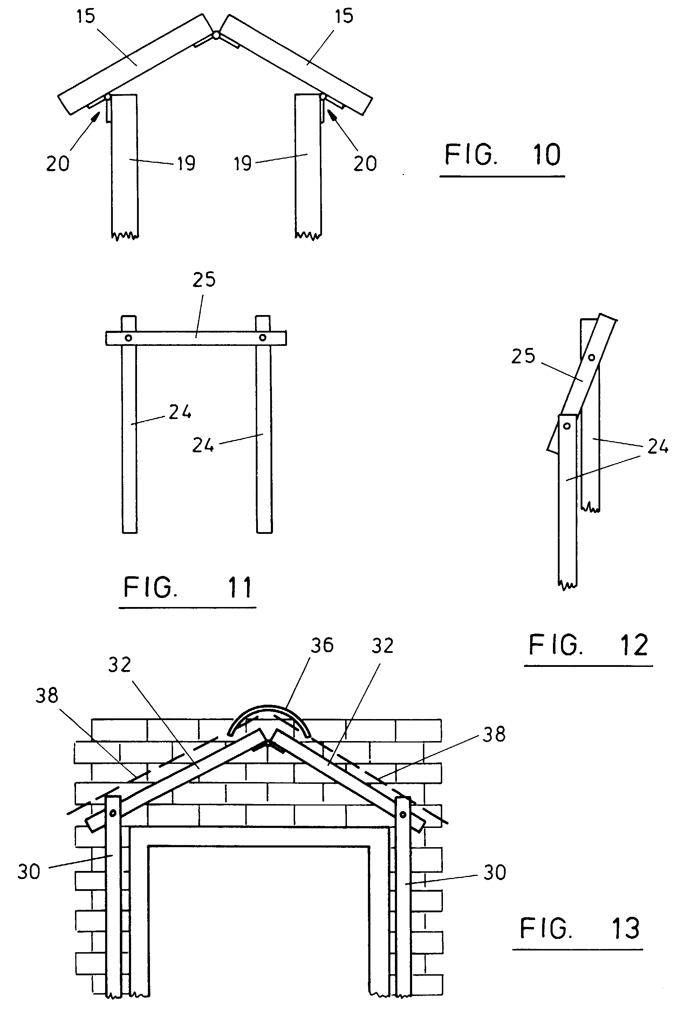

Figure 10 shows a modification in which the top panels 15 are joined to the side panels by means of hinges 20: the hinges are fixed to the upright side posts of the two side panels and the corresponding skirting boards 18 of the top panels. The trellis can still fold down with the side panels flat against each other, but the top panels do not lie as flat together as in the arch of Figure 8.

Figure 11 shows another modification to the arch of Figure 8, having only a single top panel 25 which is pivoted to both side panels 24,24, providing a flat top to the arch. This arch folds down in the manner shown in Figure 12.

Whilst the trellis panels which have been described are constructed of two series of battens at right angles to each other, forming a square or rectangular grid pattern, each panel may instead be constructed of battens forming a diamond or other pattern. Also, although the battens which have been shown are square or rectangular in section, they may be of other cross-sectional shapes e.g. full round (circular) or half round (semi-circular).

It will be appreciated that in each of the above-described trellis arches, the side panels can be closed together once the arch has been assembled by the manufacturer. For erection, the side panels can be opened apart as far as desired, this also controlling the apex angle.

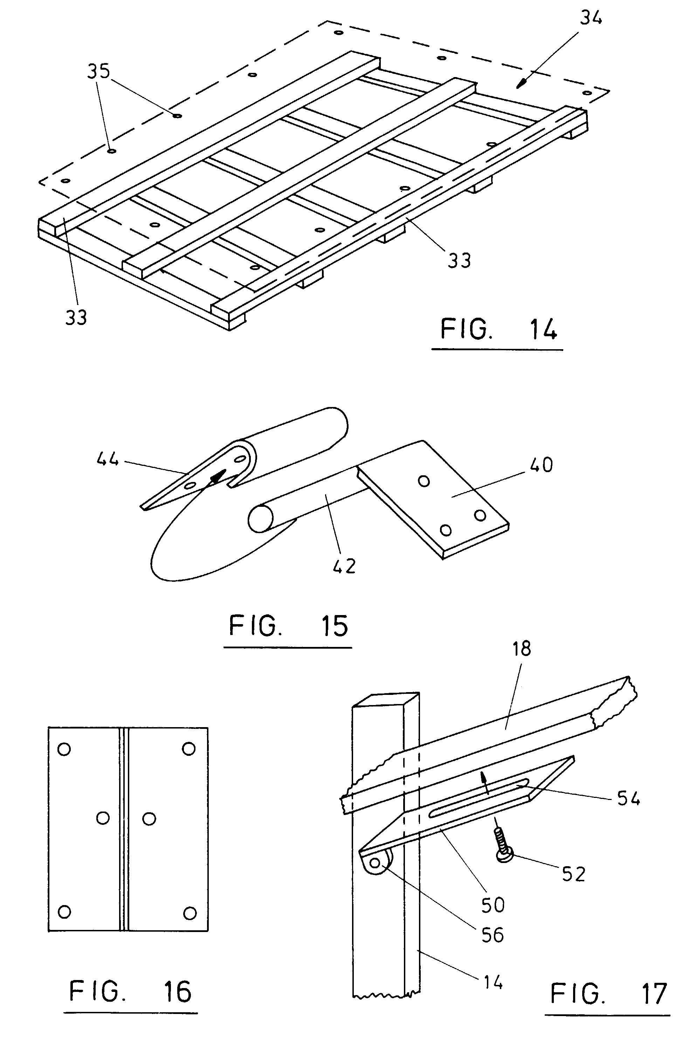

Similar structures to the above-described trellis arches may be used to form a porch at a doorway or other entrance into a house or other building. Figure 13 shows such a porch, which comprises two side panels 30 and two top or roof panels 32 pivoted together in the same manner as the trellis arch of Figure 8. The side panels are opened apart to the desired spacing and the structure is secured to the wall e.g. via brackets. The top panels are covered by sheets of, for example, clear perspex 34, indicated in Figure 14 by dotted lines: these sheets 34 are secured to the framework of the top panels by screws passed through holes 35 in the sheets 34 and directly into the framework.

A sealant is used between each sheet 34 and the skirting boards 33 of the respective top panel. The sheet 34 extends to, and preferably beyond, the lower edge of its top panel 32, which projects beyond the corresponding side panel 30: thus, any rain water which falls onto the porch runs down the covered top panels and falls onto the ground. The apex of the structure is covered by a ridge member 36 for example of plastic, secured down by fasteners extending through it into the framework and sealed around its edges by a suitable sealant.

In order to prevent water running down between the top of the porch and the wall against which it is erected, a coving 38 may be attached to the wall, indicated by dotted lines in Figure 13, to overlap the back edge of each covered top panel of the porch.

The side panels of the porch may also be covered by sheets of e.g. perspex, secured and sealed as described for the top panels.

The trellis arches of Figures 1 to 11 may be covered by sheets e.g. of perspex in a similar manner, especially over their top panels.

Although the use of leaf-type hinges has been described both for the trellis arch and the porch, other types of hinges may be used, for example those shown in Figure 15 and 16. Figure 15 shows a hinge which comprises a first leaf 40 from which a pin 42 extends, and a second leaf 44 having a hooked end for hooking over the pin 42. Figure 16 shows a hinge which comprises a member of plastics material having a line of flexing created between two leaf portions. Figure 17 shows a bracket particularly applicable to the trellis arch of Figures 8 and 11 and the porch of Figures 13 and 14: the bracket comprises a leaf 50 for fixing to the skirting board 18 of the top panel by means of a screw 52 passed through a slot 54 in the leaf 50. The leaf has a pair of lugs 56 (one shown) projecting from it, to receive the bolt 17 for pivotally attaching the bracket to the post 14 of the side panel. The arrangement enables some adjustment of the width of the arch whilst maintaining the same pitch of its top.

It will be appreciated that although the trellis arch and the arch structure of the porch have been described as a unitary structure assembled by the manufacturer, each of these arches may be supplied with the various panels as separate components which are then assembled by the user.

## Claims

1. An arch structure comprising two opposite side panels pivotally connected to a single top panel, or to respective top panels which are themselves pivotally connected together, the arrangement enabling the two side panels to be closed together for storage or transport and opened apart for use.

2. An arch structure as claimed in claim 1, in which each side panel includes two uprights which project upwardly from a top edge of that side panel and the top panel, or respective top panel, extends between and is pivoted to said two uprights.

3. An arch structure as claimed in claim 1 or 2, in which the adjacent pairs of panels are pivotally interconnected by means of bolts.

4. An arch structure as claimed in claim 1 or 2, in which the adjacent pairs of panels are pivotally interconnected by means of hinges.

5. An arch structure as claimed in claim 4, in which said hinges comprise one-piece members of plastics material.

6. An arch structure as claimed in claim 4, in which said hinges comprise flexible straps secured adjacent their opposite ends to the respective panels.

7. An arch structure as claimed in any preceding claim, in which each of said panels comprises an open framework.

8. An arch structure as claimed in claim 7, in which said framework of each panel is formed of wooden battens.

9. An arch structure as claimed in any preceding claim, in the form of a porch for an entrance into a building and further comprising sheets to cover said side and top panels.

10. An arch structure as claimed in claim 9, comprising two said top panels and further comprising a ridge member to cover an apex formed between said two top panels.
